# EUROPÄISCHE PATENTSCHRIFT

(11) **EP 4 299 930 B1**
(45) Veröffentlichungstag und Bekanntmachung des Hinweises auf die Patenterteilung: **03.09.2025**
(21) Anmeldenummer: 22182514.4
(22) Anmeldetag: 01.07.2022
(51) Int. Cl.: F16B 37/08, F16B 5/02

(54) **VERBINDER FÜR ZWEI BAUTEILE**
CONNECTOR FOR TWO COMPONENTS
DISPOSITIF DE LIAISON POUR DEUX COMPOSANTS

(43) Veröffentlichungstag der Anmeldung: 03.01.2024
(73) Patentinhaber: Knapp GmbH, 3324 Euratsfeld (AT)
(72) Erfinder: KNAPP, Friedrich, 4362 Bad Kreuzen (AT)
(74) Vertreter: Weiser Voith Gugler Patentanwälte Partnerschaft

(56) Entgegenhaltungen:
- US-A- 2 378 957
- US-A- 5 775 862

## Beschreibung

Die vorliegende Erfindung betrifft einen Verbinder für zwei Bauteile, insbesondere Holzbauteile. Der Verbinder umfasst eine mit dem ersten der beiden Bauteile verbindbare Platte mit einer Ober- und einer Unterseite, einer die Platte von der Ober- zur Unterseite durchsetzenden Öffnung und zumindest zwei über den Umfang der Öffnung verteilten Federzungen, welche jeweils radial in die Öffnung hineinragen und an der Oberseite der Platte in spitzem Winkel aus der Plattenebene herausragen, wobei zwischen ihren freien Enden eine lichte Weite verbleibt. Ferner umfasst der Verbinder einen mit dem zweiten der beiden Bauteile verbindbaren Gewindebolzen, dessen Durchmesser die zwischen den freien Enden der Federzungen verbleibende lichte Weite übertrifft.

Verbinder solcher Art sind z.B. als Innenzahn-Sicherungsring, Sicherungsscheibe bzw. Klemmscheibe bekannt. Mit einem solchen Innenzahn-Sicherungsring wird eine Gewindeschraube od.dgl. hinter einer Bohrung gesichert. Durch die an der Oberseite aus der Plattenebene herausragenden Federzungen kann die Schraube in einer Normalrichtung auf die Plattenebene, nämlich in der Richtung von der Unter- zur Oberseite der Platte, in die Öffnung so weit wie nötig einfach eingeführt bzw. eingedrückt werden, wobei ihr Gewinde an den freien Enden der Federzungen verrastet. In der verrasteten Stellung ist die Schraube in der entgegengesetzten anderen Normalrichtung an den freien Enden der Federzungen arretiert und kann nicht herausgezogen werden: Eine Zugkraft in diese andere Normalrichtung bewirkt über die Federzungen (bzw. Innenzähne) und ihre spitzen Winkel eine Radialkraft nach außen auf die Platte bzw. den Sicherungsring, welche die Platte bzw. der Sicherungsring aufnimmt, d.h. ihr widersteht.

Ein Innenzahn-Sicherungsring ermöglicht eine raschere Befestigung als z.B. eine herkömmliche Schraubverbindung mit Schraube und Schraubenmutter und - im Gegensatz z.B. zu einer Klebeverbindung - eine sofortige Zugbelastung in der genannten anderen Normalrichtung und, falls erforderlich, ein späteres Lösen der Verbindung durch Herausdrehen der Schraube.

Für geringe Zugbelastungen sind derartige Verbinder aus Gewindeschraube und Innenzahn-Sicherungsring günstig und zweckmäßig, um zwei kleine bzw. flache Bauteile beliebiger Art und Beschaffenheit zu verbinden. Auf größere Bauteile und für höhere Zugbelastungen, wie sie beispielsweise im Holzbau häufig auftreten, ist dieses Prinzip jedoch nicht ohne Weiteres anwendbar, da herkömmliche Innenzahn-Sicherungsringe aufgrund ihrer Bauform und Baugröße die auftretenden Belastungen nicht annähernd aufnehmen können. Wie sich überdies herausgestellt hat, reicht eine bloße Vergrößerung der Innenzahn-Sicherungsringe nicht aus, den auftretenden Kräften zuverlässig zu widerstehen, da die Zugbelastbarkeit nicht proportional zur Bauteilvergrößerung steigt und der verfügbare Bauraum begrenzt ist.

Um das beschriebene Prinzip für größere Zugkräfte verwendbar zu machen, ist beispielsweise aus der US 2 378 957 A ein Verbinder bekannt, bei welchem das freie Ende jeder Federzunge ferner einen in einer der beiden Normalrichtungen auf die Plattenebene gerichteten Kragenabschnitt hat, an welchem ein mit dem Gewinde des Gewindebolzens korrespondierender zwei- oder mehrgängiger Gewindeabschnitt ausgebildet ist.

Die Erfindung setzt sich zum Ziel, einen Verbinder für zwei Bauteile zu schaffen, der eine einfache Herstellung der Gewindeabschnitte und eine Anpassung an verschiedene Gewindebolzen ermöglicht.

Dieses Ziel wird mit einem Verbinder der eingangs angeführten Art und gemäß Anspruch 1 erreicht, bei welchem das freie Ende jeder seiner Federzungen einen mit dem Gewinde des Gewindebolzens korrespondierenden zwei- oder mehrgängigen Gewindeabschnitt hat und der sich dadurch auszeichnet, dass das freie Ende jeder Federzunge mit einer Endkappe versehen, an welcher der Gewindeabschnitt ausgebildet ist.

Wird der Gewindebolzen in der genannten einen Normalrichtung (von Unter- zur Oberseite) in die Öffnung eingeführt bzw. eingedrückt, verrastet sein Gewinde an den zwei oder mehr Gängen der Gewindeabschnitte. In dieser verrasteten Stellung ist der Gewindebolzen in die entgegengesetzte andere Normalrichtung sicher arretiert. Die mit dem Gewindebolzen korrespondierenden zwei- oder mehrgängigen Gewindeabschnitte bewirken eine wesentlich bessere Kraftübertragung vom Gewindebolzen auf die Federzungen als bei einem herkömmlichen Innenzahn-Sicherungsring, wo im Allgemeinen lediglich schmale Segmente der freien Enden oft nur einzelner der Federzungen mit dem Gewinde der Schraube in Eingriff stehen. Infolgedessen kann eine wesentlich höhere Kraft sicher auf den die Öffnung umgebenden Teil der Platte übertragen und von diesem zuverlässig aufgenommen werden, ohne dass der Verbinder übermäßig vergrößert werden müsste. Die erfindungsgemäße Lösung ist auf Verbinder jeder Größe anwendbar und ermöglicht weiterhin die einfache Handhabung durch axiales Einführen und Verrasten des Gewindebolzens in der einen Normalrichtung, das sichere Arretieren in der anderen Normalrichtung und das optionale Lösen der Verbindung durch Herausdrehen des Gewindebolzens.

Die Endkappe ermöglicht, den Gewindeabschnitt überhaupt unabhängig von der Platte und den Federzungen herzustellen und die freien Enden der Federzungen erst hinterher mit den Endkappen zu versehen. Die Endkappen können dabei unlösbar mit den Federzungen verbunden, z.B. geklebt, geschweißt, gecrimpt etc. sein. Besonders günstig ist, wenn die Endkappen abnehmbar sind. Dadurch kann ein und dieselbe Platte je nach Erfordernis mit unterschiedlichen Endkappen versehen werden. Beispielsweise können die Endkappen erst auf einer Baustelle an den dort verwendeten Gewindebolzen angepasst werden, indem Endkappen mit korrespondierender Gewindesteigung und/oder -form aufgesetzt werden. Optional können auch bereits aufgesetzte Endkappen getauscht werden.

Je nach Material der Bauteile, der Platte und des Gewindebolzens ist in einer Variante besonders vorteilhaft, wenn die Endkappen aus Metall sind. Dies schafft eine robuste, elektrisch und thermisch gut leitende Verbindung zwischen Platte und Gewindebolzen, wenn gewünscht. In einer Alternativvariante sind die Endkappen aus Kunststoff. Dadurch ist auf einfache Weise eine gute elektrische und thermische Isolation zwischen Platte und Gewindebolzen und allenfalls zwischen den beiden Bauteilen erzielbar, wenn bevorzugt.

Die Platte kann aus beliebigem Material sein, z.B. aus Kunststoff, insbesondere faserverstärktem Kunststoff, oder Holz. In einer bevorzugten Ausführungsform ist die Platte aus Metall, bevorzugt aus Federstahl. Die Platte ist dann besonders fest und kann optional einstückig mit ihren Federzungen gefertigt werden. Der Aufbau ist dadurch bei hoher Stabilität vereinfacht.

Auch der Gewindebolzen kann aus beliebigem Material sein, z.B. aus Kunststoff, insbesondere faserverstärktem Kunststoff, oder Holz, auch aus anderem Material als die Platte. Aufgrund der Festigkeit und guten Bearbeitbarkeit ist der Gewindebolzen bevorzugt aus Metall.

Besonders vorteilhaft ist, wenn der genannte spitze Winkel zwischen 5° und 60°, bevorzugt zwischen 10° und 30°, gegenüber der Plattenebene beträgt. Dadurch kann der Gewindebolzen in der genannten einen Normalrichtung besonders einfach in seine verrastete Stellung gebracht werden und ist darauf besonders sicher in die genannte andere Normalrichtung arretiert.

Die Federzungen der Platte können in Draufsicht über den Umfang der Öffnung beliebig, z.B. spiegelsymmetrisch verteilt sein. Besonders günstig ist, wenn die Federzungen gleichmäßig über den Umfang der Öffnung verteilt sind, sodass zwischen jeweils zwei benachbarten Federzungen derselbe Winkel aufgespannt ist. Das führt zu einer besonders gleichmäßigen Kraftverteilung vom Gewindebolzen auf die Platte.

Die Platte kann an dem genannten ersten Bauteil z.B. verklebt oder verschraubt sein und/oder hintergreift den ersten Bauteil. Vorteilhaft ist, wenn die Platte zwei oder mehr um die Öffnung verteilte Befestigungsbohrungen zum Verbinden mit dem ersten Bauteil hat. Dadurch kann die Platte in jeder der vorgenannten Arten verwendet und insbesondere am ersten Bauteil verschraubt werden.

Günstig ist ferner, wenn der Gewindebolzen einen Flansch zum Verbinden mit dem zweiten Bauteil hat. Der Flansch kann dazu ferner Befestigungsbohrungen haben und/oder an den zweiten Bauteil geklebt, geschweißt od.dgl. werden oder diesen hintergreifen.

Die Erfindung wird nachfolgend anhand von in den beigeschlossenen Zeichnungen dargestellten Beispielen näher erläutert. In den Zeichnungen zeigen:
Fig. 1 einen Verbinder für zwei Bauteile, welcher eine Platte und einen Gewindebolzen umfasst, in einer Perspektivansicht von oben;
die Fig. 2a bis 2c die Platte des Verbinders von Fig. 1 in einer Seitenansicht (Fig. 2a), in Draufsicht (Fig. 2b) bzw. in einer Perspektivansicht von oben (Fig. 2c); und
die Fig. 3a bis 3c einen erfindungsgemäßen Verbinder in einer Seitenansicht (Fig. 3a), in einer Perspektivansicht von oben (Fig. 3b) bzw. ein Detail daraus in einer Perspektivansicht von oben (Fig. 3c).

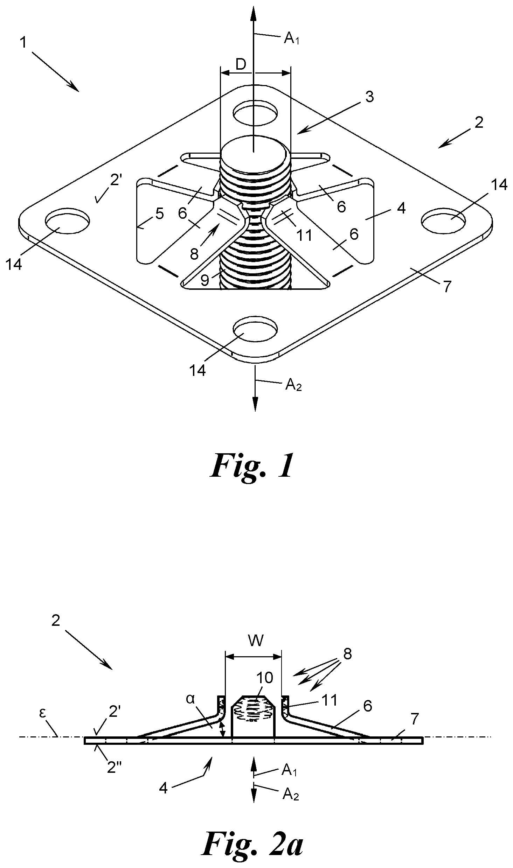

Fig. 1 zeigt einen Verbinder 1 für zwei Bauteile (nicht dargestellt). Die Bauteile können beliebige Formen haben und aus beliebigem Material sein, insbesondere aus Holz, oder aus Metall, Beton, Kunststoff, Verbundstoff, Ziegel etc. Der Verbinder 1 umfasst eine Platte 2, die mit dem ersten der beiden Bauteile verbunden werden kann, und einen Gewindebolzen 3, der mit dem zweiten der Bauteile verbunden werden kann.

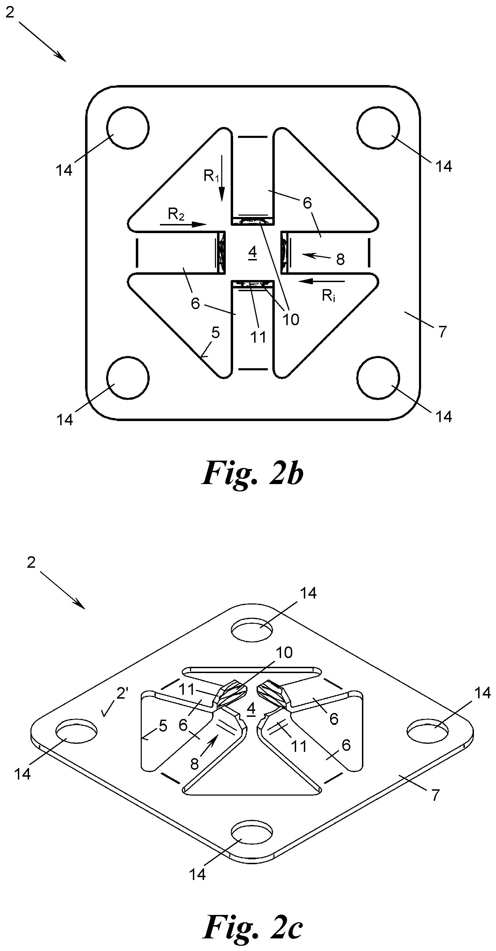

Gemäß den Fig. 1 und 2a bis 2c hat die Platte 2 eine optional mittige Öffnung 4, die die Platte 2 von ihrer Oberseite 2' zu ihrer Unterseite 2" durchsetzt. In der Öffnung 4 hat die Platte 2 zumindest zwei (hier: vier) über den Umfang 5 der Öffnung 4 verteilte Federzungen 6. Die Federzungen 6 ragen jeweils radial in die Öffnung 4 hinein und zugleich an der Oberseite 2' der Platte 2 in spitzem Winkel α aus der Plattenebene ε (hier: aus dem um die Öffnung 4 und die Federzungen 6 liegenden Teil 7 der Platte 2) heraus.

Die Öffnung 4 muss wie im dargestellten Beispiel nicht kreisrund sein; die genannten radialen Ausrichtungen der Federzungen 6 bezeichnen in jedem Fall (Radial-)Richtungen R₁, R₂, ... allgemein Rᵢ, der jeweiligen Federzungen 6 (in Draufsicht der Fig. 2b) von ihrer Wurzel am Umfang 5 der Öffnung 4 in das Innere der Öffnung 4.

Im dargestellten Beispiel sind die Federzungen 6 einstückig mit dem um die Öffnung 4 liegenden Teil 7 der Platte 2 und im Bereich ihrer jeweiligen Wurzel am Umfang 5 der Öffnung 4 um den spitzen Winkel α gegenüber der Plattenebene ε gebogen. Alternativ könnten die Federzungen 6 in diesem Winkel α gegenüber der Plattenebene ε mit ihren Wurzeln am Umfang 5 der Öffnung 4 an den umgebenden Teil 7 der Platte 2 geschweißt, geklebt, geklemmt, gecrimpt oder in anderer Weise angebracht sein.

Das dem Umfang 5 der Öffnung 4 jeweils abgewandte Ende 8 jeder Federzunge ist frei (Fig. 2a). Das freie Ende 8 jeder Federzunge 6 hat dabei einen mit dem Gewinde 9 des Gewindebolzens 3 korrespondierenden Gewindeabschnitt 10 mit zumindest zwei Gewindegängen zum Eingriff in das Gewinde 9, d.h. der Gewindeabschnitt 10 ist zwei- oder mehrgängig. Zwischen den freien Enden 8 der Federzungen 6, d.h. zwischen den Innen- bzw. Nenndurchmessern ihrer Gewindeabschnitte 10, verbleibt dabei eine lichte Weite W. Umgekehrt hat der Gewindebolzen 3 einen Durchmesser D, d.h. einen Gewinde-Außen- bzw. -Nenndurchmesser, der die zwischen den freien Enden 8 der Federzungen 6 verbleibende lichte Weite W übertrifft.

Ist der Gewindebolzen 3, wie in Fig. 1 dargestellt, in die Öffnung 4 eingeführt, liegen die freien Enden 8 der Federzungen 6 am Gewindebolzen 3 an, d.h. der Gewindebolzen 3 ist infolge seines gegenüber der lichten Weite W größeren Durchmessers D an der Platte 2, u.zw. mit seinem Gewinde 9 in den Gewindeabschnitten 10 der freien Enden 8 ihrer Federzungen 6, verrastet. Aufgrund der federnden Wirkung der Federzungen 6 und ihres mit der Plattenebene ε eingeschlossenen spitzen Winkels α kann der Gewindebolzen 3 in einer Normalrichtung A₁ auf die Plattenebene ε, nämlich von der Unter- zur Oberseite 2", 2' (in Fig. 1: nach oben), einfach weiter in die Öffnung 4 eingeführt bzw. eingedrückt werden. Die Federzungen 6 werden dabei jeweils an ihren freien Enden 8 vom Gewinde 9 des Gewindebolzens 3 nach oben verdrängt und nach außen aufgezwängt, indem die spitzen Winkel α vorübergehend geringfügig gegen die Federwirkung vergrößert werden, um darauf mit ihren Gewindeabschnitten 10 im jeweils nächstfolgenden Gewindegang des Gewindebolzens 3 wieder zu verrasten. In die der genannten einen Normalrichtung A₁ entgegengesetzte andere Normalrichtung A₂ auf die Plattenebene ε ist der Gewindebolzen 3 hingegen arretiert, da er den spitzen Winkel α der Federzungen 6 gegenüber der Plattenebene ε nicht verkleinern kann: er müsste dazu über die Federzungen 6 den um die Öffnung 4 verbleibenden Teil 7 der Platte 2 aufzwängen, was durch geeignete Gestaltung der Platte 2 verhindert werden kann.

Um die zwei oder mehr Gewindegänge in den Gewindeabschnitten 10 ausbilden - z.B. bohren, fräsen, einschneiden, einpressen oder auf andere Weise einformen - zu können, haben beispielsweise die Federzungen 6 und ihre freien Enden 8 (sowie optional die ganze Platte 2) eine dem Gewinde 7 angepasste Dicke. Im Beispiel der Fig. 1 und 2a bis 2c hat alternativ das freie Ende 8 jeder Federzunge 6 einen Kragenabschnitt 11, wobei hier die Kragenabschnitte 11 aller Federzungen 6 gemeinsam einen beinahe geschlossen umlaufenden Kragen bilden. Der Kragen bzw. die Kragenabschnitte 11 sind dabei im Wesentlichen in einer der beiden Normalrichtungen A₁, A₂ (hier: in Normalrichtung A₁) gerichtet, sodass die Platten- bzw. Federzungendicke unabhängig vom Gewinde 7 wählbar ist. An den Kragenabschnitten 11 sind die zwei- oder mehrgängigen Gewindeabschnitte 10 ausgebildet, u.zw. in Draufsicht (Fig. 2b) optional kreisrund.

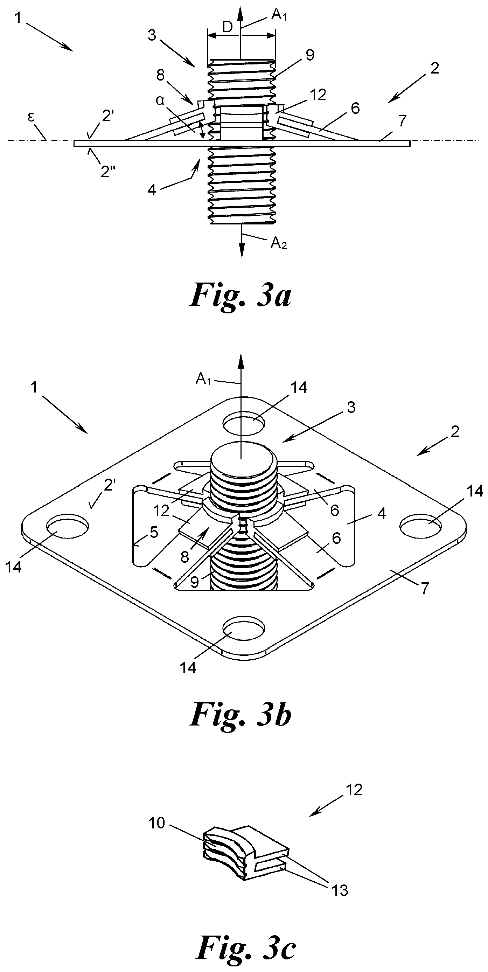

Im erfindungsgemäßen Beispiel der Fig. 3a bis 3c ist das freie Ende 8 jeder Federzunge 6 mit einer Endkappe 12 versehen. An der Endkappe 12 ist der jeweilige Gewindeabschnitt 10 ausgebildet. Die Endkappen 12 können entweder abnehmbar und somit austauschbar sein, oder sind fest mit den Federzungen 6 verbunden, z.B. verklebt, verschweißt, vercrimpt od. dgl. Jede Endkappe 12 hat z.B. eine Tasche zum Überstülpen über zumindest einen Teil der Federzunge 6. Im Beispiel der Fig. 3c hat eine Endkappe 12 die Form einer Klemme mit zwei Klemmbacken 13, zwischen welche jeweils ein Teil einer Federzunge 6 eingesteckt bzw. eingeklemmt wird.

Je nach Anforderung können die Endkappen 12 aus Metall, zum Beispiel Stahl, Messing etc. sein. Alternativ sind die Endkappen 12 aus elektrisch und/oder thermisch isolierendem Material, insbesondere Kunststoff, z.B. faserverstärktem Kunststoff.

Es versteht sich, dass die Platte 2 in allen Varianten anstelle der dargestellten vier beispielsweise nur zwei oder drei oder umgekehrt fünf oder mehr Federzungen 6 der genannten Art haben könnte. Dabei können die Federzungen 6 wie dargestellt über den Umfang der Öffnung 4 gleichmäßig verteilt sein, sodass in Draufsicht alle Winkel zwischen jeweils zwei benachbarten Federzungen 6 immer gleich sind, oder ungleichmäßig verteilt sein. Auch könnten z.B. eine einzelne Federzunge 6 von einer Umfangsseite der Öffnung 4 und zwei einander nahe benachbarte weitere Federzungen 6 von der gegenüberliegenden anderen Umfangsseite der Öffnung 4 in diese radial hineinragen; in Draufsicht ergibt dies optional eine Spiegelsymmetrie.

Der genannte spitze Winkel α beträgt in den dargestellten Beispielen etwa 15° gegenüber der Plattenebene ε in der Öffnung 4. Allgemein beträgt der genannte spitze Winkel α zwischen 5° und 60°, wird jedoch meist zwischen 10° und 30° liegen. Es versteht sich ferner, dass der spitze Winkel α im entspannten Zustand der Federzungen 6, d.h. ohne zwischen den freien Enden 8 verrastetem Gewindebolzen 3 (Fig. 2a), meist geringfügig kleiner ist, als im Fall, dass der Gewindebolzen 3 seine verrastete Stellung einnimmt (Fig. 1).

Zum Verbinden mit dem ersten Bauteil hat die Platte 2 optional zwei oder mehr (hier: vier) um die Öffnung 4 verteilte Befestigungsbohrungen 14 z.B. für Befestigungsschrauben zum Verschrauben mit dem ersten Bauteil. Alternativ oder ergänzend kann die Platte 2 mit dem ersten Bauteil verklebt, verschweißt etc. sein bzw. aus Sicht des Gewindebolzens 3 vor seinem Einführen in die Öffnung 4 hinter dem ersten Bauteil angeordnet und dem Gewindebolzen 3 über eine den ersten Bauteil durchsetzende Bohrung od.dgl. zugänglich sein, sodass die Platte 2 in der verrasteten Stellung des Gewindebolzens 3 den ersten Bauteil hintergreift und durch die Zugwirkung des Gewindebolzens 3 mit dem ersten Bauteil verbunden ist. D.h. die Platte 2 ist an ihrer Oberseite 2', beim Hintergreifen hingegen an ihrer Unterseite 2" mit dem ersten Bauteil verbunden.

Analog dazu hat optional der Gewindebolzen 3 zum Verbinden mit dem zweiten Bauteil einen Flansch (nicht dargestellt). Der Flansch könnte als Schraubenkopf zum Ansetzen eines Schraubwerkzeugs ausgebildet sein, in welchem Fall der Gewindebolzen 3 eine Schraube wäre, alternativ kann der Flansch zum Beispiel ein Klebe- oder Schweißflansch sein und/oder ebenfalls Befestigungsbohrungen enthalten. Ohne Flansch kann der Gewindebolzen 3 zum Verbinden optional in den zweiten Bauteil gedreht werden.

Die Platte 2 ist entweder aus Metall, bevorzugt aus Federstahl, oder alternativ aus Kunststoff, insbesondere faserverstärktem Kunststoff, aus Holz oder einem anderen Werkstoff. Auch der Gewindebolzen 3 ist beispielsweise aus Metall, aus Kunststoff, insbesondere faserverstärktem Kunststoff, aus Holz, wenn gewünscht, oder einem anderen Werkstoff. Insbesondere können die Platte 2 und der Gewindebolzen 3 aus voneinander verschiedenen Werkstoffen sein.

Die Erfindung ist nicht auf die dargestellten Ausführungsbeispiele beschränkt, sondern umfasst jene Varianten, Modifikationen und deren Kombinationen, die in den Rahmen der angeschlossenen Ansprüche fallen.

## Patentansprüche

1. Verbinder für zwei Bauteile, insbesondere Holzbauteile, umfassend
eine mit dem ersten der beiden Bauteile verbindbare Platte (2) mit einer Ober- und einer Unterseite (2', 2"), einer die Platte von der Ober- zur Unterseite (2', 2") durchsetzenden Öffnung (4) und zumindest zwei über den Umfang (5) der Öffnung (4) verteilten Federzungen (6), welche jeweils radial in die Öffnung (4) hineinragen und an der Oberseite (2') der Platte (2) in spitzem Winkel (α) aus der Plattenebene (ε) herausragen, wobei zwischen ihren freien Enden (8) eine lichte Weite (W) verbleibt, und
einen mit dem zweiten der beiden Bauteile verbindbaren Gewindebolzen (3), dessen Durchmesser (D) die zwischen den freien Enden (8) der Federzungen (6) verbleibende lichte Weite (W) übertrifft,
wobei das freie Ende (8) jeder Federzunge (6) einen mit dem Gewinde (9) des Gewindebolzens (3) korrespondierenden zwei- oder mehrgängigen Gewindeabschnitt (10) hat,
**dadurch gekennzeichnet, dass** das freie Ende (8) jeder Federzunge (6) mit einer Endkappe (12) versehen ist, an welcher der Gewindeabschnitt (10) ausgebildet ist.

2. Verbinder nach Anspruch 1, **dadurch gekennzeichnet, dass** die Endkappen (12) abnehmbar sind.

3. Verbinder nach Anspruch 1 oder 2, **dadurch gekennzeichnet, dass** die Endkappen (12) aus Metall sind.

4. Verbinder nach Anspruch 1 oder 2, **dadurch gekennzeichnet, dass** die Endkappen (12) aus Kunststoff sind.

5. Verbinder nach einem der Ansprüche 1 bis 4, **dadurch gekennzeichnet, dass** die Platte (2) aus Metall, bevorzugt aus Federstahl, ist.

6. Verbinder nach einem der Ansprüche 1 bis 5, **dadurch gekennzeichnet, dass** der Gewindebolzen (3) aus Metall ist.

7. Verbinder nach einem der Ansprüche 1 bis 6, **dadurch gekennzeichnet, dass** der genannte spitze Winkel (α) zwischen 5° und 60°, bevorzugt zwischen 10° und 30°, gegenüber der Plattenebene (ε) beträgt.

8. Verbinder nach einem der Ansprüche 1 bis 7, **dadurch gekennzeichnet, dass** die Federzungen (6) gleichmäßig über den Umfang (5) der Öffnung (4) verteilt sind.

9. Verbinder nach einem der Ansprüche 1 bis 8, **dadurch gekennzeichnet, dass** die Platte (2) zum Verbinden mit dem ersten Bauteil zwei oder mehr um die Öffnung (4) verteilte Befestigungsbohrungen (14) hat.

10. Verbinder nach einem der Ansprüche 1 bis 9, **dadurch gekennzeichnet, dass** der Gewindebolzen (3) zum Verbinden mit dem zweiten Bauteil einen Flansch hat.

## Claims

1. A connector for two components, in particular wood components, comprising
a plate (2) connectable to the first of the two components, having a top side and a bottom side (2', 2"), an opening (4) passing through the plate from the top side to the bottom side (2', 2") and at least two spring tongues (6) distributed around the periphery (5) of the opening (4), which each project radially into the opening (4) and project at an acute angle (α) out of the plate plane (ε) on the top side (2') of the plate (2), wherein a clear width (W) remains between their free ends (8), and
a threaded bolt (3) connectable to the second of the two components, whose diameter (D) exceeds the clear width (W) remaining between the free ends (8) of the spring tongues (6),
wherein the free end (8) of each spring tongue (6) has a double-thread or multi-thread threaded portion (10) corresponding to the thread (9) of the threaded bolt (3),
**characterised in that** the free end (8) of each spring tongue (6) is provided with an end cap (12), on which the threaded portion (10) is formed.

2. The connector according to claim 1, **characterised in that** the end caps (12) are removable.

3. The connector according to claim 1 or 2, **characterised in that** the end caps (12) are made of metal.

4. The connector according to claim 1 or 2, **characterised in that** the end caps (12) are made of plastic.

5. The connector according to any one of claims 1 to 4, **characterised in that** the plate (2) is made of metal, preferably of spring steel.

6. The connector according to any one of claims 1 to 5, **characterised in that** the threaded bolt (3) is made of metal.

7. The connector according to any one of claims 1 to 6, **characterised in that** said acute angle (α) is between 5° and 60°, preferably between 10° and 30°, relative to the plate plane (ε).

8. The connector according to any one of claims 1 to 7, **characterised in that** the spring tongues (6) are distributed evenly around the periphery (5) of the opening (4).

9. The connector according to any one of claims 1 to 8, **characterised in that** the plate (2), for connecting to the first component, has two or more fastening bores (14) distributed around the opening (4).

10. The connector according to any one of claims 1 to 9, **characterised in that** the threaded bolt (3), for connecting to the second component, has a flange.

## Revendications

1. Connecteur pour deux composants, notamment des composants en bois, comprenant
une plaque (2) pouvant être reliée avec le premier des deux composants, avec une face supérieure et une face inférieure (2', 2"), un orifice (4) traversant la plaque de la face supérieure à la face inférieure (2', 2") et au moins deux languettes de ressort (6) réparties sur le pourtour (5) de l'orifice (4), lesquelles respectivement pénètrent radialement dans l'orifice (4) et sortent du plan de la plaque (ε) sur la face supérieure (2') de la plaque (2) avec un angle aigu (α), où une largeur intérieure (W) reste entre leurs extrémités libres (8), et
un boulon fileté (3) pouvant être relié au second des deux composants dont le diamètre (D) dépasse la largeur intérieure (W) restant entre les extrémités libres (8) des languettes de ressort (6),
dans lequel l'extrémité libre (8) de chaque languette de ressort (6) possède une partie filetée (10) à deux filets ou filets multiples correspondants au filetage (9) du boulon fileté (3),
**caractérisé en ce que** l'extrémité libre (8) de chaque languette de ressort (6) est munie d'un capuchon d'extrémité (12) sur lequel la partie filetée (10) est formée.

2. Connecteur selon la revendication 1, **caractérisé en ce que** les capuchons d'extrémité (12) sont amovibles.

3. Connecteur selon la revendication 1 ou la revendication 2, **caractérisé en ce que** les capuchons d'extrémité (12) sont en métal.

4. Connecteur selon la revendication 1 ou la revendication 2, **caractérisé en ce que** les capuchons d'extrémité (12) sont en matière plastique.

5. Connecteur selon l'une des revendications 1 à 4, **caractérisé en ce que** la plaque (2) est en métal, de préférence en acier à ressort.

6. Connecteur selon l'une des revendications 1 à 5, **caractérisé en ce que** le boulon fileté (3) est en métal.

7. Connecteur selon l'une des revendications 1 à 6, **caractérisé en ce que** ledit angle aigu (α) se situe entre 5 ° et 60 °, de préférence entre 10 ° et 30 °, par rapport au plan de la plaque (ε).

8. Connecteur selon l'une des revendications 1 à 7, **caractérisé en ce que** les languettes de ressort (6) sont réparties régulièrement sur le pourtour (5) de l'orifice (4).

9. Connecteur selon l'une des revendications 1 à 8, **caractérisé en ce que** la plaque (2) possède deux ou plusieurs alésages de fixation (14) répartis autour de l'orifice (4) pour la liaison avec le premier composant.

10. Connecteur selon l'une des revendications 1 à 9, **caractérisé en ce que** le boulon fileté (3) possède une bride pour la liaison avec le deuxième composant.
